# EUROPÄISCHE PATENTSCHRIFT

(11) **EP 3 645 344 B1**
(45) Veröffentlichungstag und Bekanntmachung des Hinweises auf die Patenterteilung: **16.09.2020**
(21) Anmeldenummer: 19722827.3
(22) Anmeldetag: 30.04.2019
(51) Int. Cl.: B60R 16/037, B60W 50/00

(54) **VERFAHREN ZUM BETREIBEN EINES KRAFTFAHRZEUGSYSTEMS ANHAND EINER BENUTZERSPEZIFISCHEN BENUTZEREINSTELLUNG, SPEICHERMEDIUM, ZUORDNUNGSEINRICHTUNG, KRAFTFAHRZEUG UND SERVERVORRICHTUNG ZUM BETREIBEN IM INTERNET**
METHOD FOR OPERATING A MOTOR VEHICLE SYSTEM ON THE BASIS OF A USER-SPECIFIC USER SETTING, STORAGE MEDIUM, ASSIGNMENT DEVICE, MOTOR VEHICLE AND SENSOR DEVICE FOR OPERATING ON THE INTERNET
PROCÉDÉ PERMETTANT DE FAIRE FONCTIONNER UN SYSTÈME DE VÉHICULE AUTOMOBILE AU MOYEN D'UN RÉGLAGE UTILISATEUR SPÉCIFIQUE À L'UTILISATEUR, SUPPORT DE STOCKAGE, DISPOSITIF D'AFFECTATION, VÉHICULE AUTOMOBILE ET DISPOSITIF SERVEUR DESTINÉ À FONCTIONNER SUR INTERNET

(30) Priorität: 14.05.2018 DE 102018207379
(43) Veröffentlichungstag der Anmeldung: 06.05.2020
(73) Patentinhaber: Audi AG, 85045 Ingolstadt (DE)
(72) Erfinder: SCHÖN, Torsten, 85111 Pietenfeld (DE)
(86) Internationale Anmeldenummer: PCT/EP2019/060997
(87) Internationale Veröffentlichungsnummer: WO 2019/219369

(56) Entgegenhaltungen:
- WO-A1-2013/101054
- WO-A1-2016/026028
- DE-A1-102017 105 786
- US-A1- 2012 016 827

## Beschreibung

Die Erfindung betrifft ein Verfahren zum Betreiben eines Kraftfahrzeugsystems anhand einer benutzerspezifischen Benutzereinstellung. Das Kraftfahrzeugsystem kann dabei beispielsweise eine Klimaanlage oder Infotainmentsystem oder ein Gerät zum Einstellen einer Sitzposition ausgestaltet sein.

Auf den Fahrer abgestimmte Vorkonditionierungen eines Fahrzeuges werden heutzutage nicht vorgenommen. In der Regel muss der Fahrer - oder ein anderer Benutzer des Kraftfahrzeugs - nach dem Einsteigen die Geräte und Systeme des Kraftfahrzeugs auf seine Vorlieben selbst abstimmen und einstellen, sofern die Einstellungen nicht sowieso schon bei der letzten Fahrt so vorgenommen wurden. Ein Benutzer des Kraftfahrzeugs muss also für sich selbst individuell und manuell auswählen, welche Fahrzeugeinstellungen für ihn optimal sind.

Die DE 10 2015 207 774 A1 beschreibt eine Vorrichtung zur Identifizierung eines Fahrers während oder nach einer Fahrt mit einem Fahrzeug und ein Fahrzeug.

Die DE 10 2017 105 786 A1 beschreibt ein Verfahren zum Identifizieren einer Person als einen Fahrer eines Fahrzeugs.

Aus der DE 10 2014 207 807 A1 ist ein Verfahren zur personenbezogenen Unterstützung eines Fahrers eines Fahrzeugs bekannt.

Sofern durch diesen Stand der Technik überhaupt das Einstellen einer benutzerspezifischen Kraftfahrzeugsystem-Konfiguration vorgesehen ist, erfolgt dies nach einer Identifizierung, also nach einem Feststellen der Identität des Fahrers. Bei einer Identifizierung mittels eines Schlüssels oder anderen Gegenstandes kann das Problem auftreten, dass das Einstellen der Konfiguration nicht erfolgen kann, falls der Benutzer des Kraftfahrzeugs diesen Gegenstand zum Identifizieren nicht bei sich trägt. Wird eine Identität beispielsweise anhand eines Funkschlüssels ermittelt, kann es passieren, dass Einstellungen für die durch den beispielhaften Funkschlüssel beschriebene Identität nicht zu einem aktuellen Benutzer passen, falls der aktuelle Benutzer nicht die Person ist, der der Funkschlüssel zugeordnet ist. Der Benutzer muss also mit Einstellungen fahren, die nicht für ihn spezifisch sind.

Beim Identifizieren durch ein biometrisches Merkmal ist eine teure und aufwendige Sensorik notwendig, beispielsweise ein Fingerabdrucksensor. Das Einstellen der Konfiguration funktioniert nur in solchen Kraftfahrzeugen, die solche Sensoren haben. Außerdem muss beispielsweise zum Vergleich eines eingescannten Fingerabdrucks ein Abbild des Fingerabdrucks des Fahrers als Referenz vorliegen, was in beispielsweise in fremden Kraftfahrzeugen problematisch und/oder unerwünscht sein kann. Fährt der Benutzer ein fremdes Kraftfahrzeug, das zum Beispiel ein Kraftfahrzeugsystem aufweist, das sein eigenes Kraftfahrzeug nicht hat, weiß er unter Umständen noch nicht einmal, welche Funktionen dieses Kraftfahrzeugsystem hat, und was man einstellen kann.

Eine der Erfindung zu Grunde liegende Aufgabe ist das Verbessern einer Anpassung der Kraftfahrzeugsystemeinstellungen an persönliche Bedürfnisse.

Die gestellte Aufgabe wird durch das erfindungsgemäße Verfahren und die erfindungsgemäßen Vorrichtungen der nebengeordneten Patentansprüche gelöst. Vorteilhafte Weiterbildungen sind durch die Unteransprüche gegeben.

Die Erfindung basiert auf der Idee, eine Deep-Learning-Engine zu betreiben, die durch Analyse von Gendaten gelernt hat, genetische Muster von einer Vielzahl von Personen in Verbindung mit fahrzeugbezogenen Eigenschaften zu bringen. Mit den fahrzeugbezogenen Eigenschaften sind damit die Benutzerpräferenzen oder die bevorzugten Einstellungen mindestens eines Kraftfahrzeugsystems gemeint. Eine derart trainierte Deep-Learning-Engine kann anhand eines Genmusters eines aktuellen Benutzer des Kraftfahrzeugs feststellen, vorzugsweise prädizieren, welche Benutzereinstellungen der Benutzer höchstwahrscheinlich bevorzugt. Mit anderen Worten erfolgt kein Feststellen der Identität des aktuellen Benutzers, sondern ein Feststellen, also zum Beispiel ein Vorhersehen, Prognostizieren oder Prädizieren, seiner Vorlieben in Bezug auf die Benutzereinstellung des mindestens eines Kraftfahrzeugsystems.

Mit anderen Worten basiert die Erfindung auf der Idee, Kraftfahrzeugeinstellungen in Abhängigkeit von einem Genmuster des aktuellen Benutzers zu personalisieren. Es geht dabei also nicht um das biometrische Erfassen und Ermitteln der Identität des Fahrers, sondern um das Vorhersehen oder Prognostizieren derjenigen Einstellungen, die er höchstwahrscheinlich bevorzugt.

Mithilfe der Erfindung kann ein Personalisieren des mindestens einen Kraftfahrzeugsystems unabhängig vom Kraftfahrzeug erfolgen, also auch beispielsweise in einem fremden Kraftfahrzeug. In dem Kraftfahrzeug müssen keine persönlichen oder sogar biometrischen Daten des Fahrers gespeichert werden. Die Einstellungen dem Benutzer fremder Kraftfahrzeugsysteme werden vorgenommen, ohne dass der Fahrer sich bewusst sein kann, dass er diese Einstellungen gerne mag.

Viele Eigenschaften und Verhaltensweisen sind zumindest teilweise in Genen definiert. Durch den Trainingsvorgang der Deep-Learning-Engine kann ein Zusammenhang zwischen beispielsweise einer Vorliebe für dynamisches Fahren in Verbindung mit einem Genabschnitt gebracht werden, beispielsweise in Verbindung mit einem Gen. Durch Identifikation dieser Genabschnitte, zum Beispiel dieser Gene, kann eine genetisch basierte Voreinstellung des Fahrzeuges für den Fahrer stattfinden. Der Benutzer muss sich nicht unnötig mit dem Einstellen seiner Präferenzen befassen und spart dadurch Zeit. Außerdem kann er noch mehr Aufmerksamkeit auf das Verkehrsgeschehen lenken, weswegen eine Fahrsicherheit deutlich erhöht wird. Zusätzlich zu den bereits genannten Vorteilen ergibt sich für den Kraftfahrzeughersteller eine bessere Kundenbindung, da die Fahrer das Kraftfahrzeug mit den vorhergesagten benutzerspezifischen Einstellungen sehr zufrieden benutzen.

Das erfindungsgemäße Verfahren zum Betreiben eines Kraftfahrzeugsystems, beispielsweise einer Klimaanlage oder eines Fahrerassistenzsystems, anhand einer benutzerspezifischen Benutzereinstellung weist die folgenden, durch eine Zuordnungseinrichtung durchgeführten Schritte auf. Unter einer Zuordnungseinrichtung wird dabei ein Gerät oder eine Gerätekomponente zum Empfangen und Auswerten von Signalen verstanden, wobei die Zuordnungseinrichtung ebenfalls zum Erzeugen von Steuersignalen ausgestaltet und eingerichtet ist. Die Zuordnungseinrichtung kann dabei vorzugsweise als Steuergerät oder Steuerchip ausgestaltet sein, und vorzugsweise im Kraftfahrzeug oder in einem kraftfahrzeugexternen Datenserver oder Datenserververbund angeordnet sein.

Es erfolgt ein Bereitstellen einer Genprofildatei, die ein Genmuster eines Benutzers des Kraftfahrzeugs beschreibt. Unter einem Genmuster wird dabei eine genetische Information eines Genes oder Genabschnittes oder eines Abschnittes einer Nukleinsäure verstanden. Das beschriebene Genmuster beschreibt dabei zum Beispiel einen Genbereich oder Genabschnitt eines Gens oder Genoms des Benutzers, zum Beispiel eine Nukleinsäuresequenz, und/oder zum Beispiel einen Basenanteil des Genabschnittes, und/oder ein Genexpressionsprofil, vorzugsweise unter Angabe eines Genlokus oder mehrerer Genloci. Mit anderen Worten kann die Genprofildatei vorzugsweise ein Genmuster eines vorgegebenen oder vorbestimmten Genabschnittes beschreiben.

Es erfolgt ein Übertragen der bereitgestellten Genprofildatei an eine Deep-Learning-Engine. Die Zuordnungseinrichtung führt ein Betreiben der Deep-Learning-Engine ("Deep-Learning-Einrichtung") durch, wobei durch die Deep-Learning-Engine zu einer Vielzahl von Personen jeweils ein oder mehrere Genmuster mindestens eines vorbestimmten Genbereichs und einer jeweiligen bevorzugten Benutzereinstellung statistisch zusammengefasst sind. Vorzugsweise ist dabei der vorbestimmte Genbereich der gleiche Genbereich, für den das Genmuster des Benutzers durch die Genprofildatei beschrieben wird. Die jeweilig bevorzugte Benutzereinstellung kann vorzugsweise mindestens einen Parameter oder ein Parameterset einer vorbestimmten Einstellung des Kraftfahrzeugsystems beschreiben.

Die Kombination der jeweiligen bevorzugten Benutzereinstellung und das entsprechende Genmuster kann dabei als Erfahrungswert bezeichnet werden, mit der die Deep-Learning-Engine antrainiert worden sein kann. Unter einem Erfahrungswert wird ein Wert oder eine Angabe verstanden, der/die zum Beispiel auf empirischen Messungen oder Untersuchung basierend eine Aussage darüber trifft, ob zum Beispiel die bevorzugte Benutzereinstellung mit dem Genmuster des Genbereichs korreliert. Mit anderen Worten kann der Erfahrungswert zum Beispiel ein numerischer Wert oder ein Zuordnungswert sein. Unter einem Erfahrungswert wird auch eine funktionelle Abhängigkeit oder eine funktionale Zuordnung verstanden, die eine Aussage darüber trifft, ob oder zu welcher Benutzereinstellung das Genmuster zugeordnet werden kann. Unter einem Erfahrungswert wird, mit anderen Worten, deswegen auch eine auf numerischen Werten basierende Regel für die Zuordnung verstanden.

Eine Deep-Learning-Engine ("Deep-Learning-Einrichtung") ist ein Gerät, eine Gerätekomponente oder ein Programm, welches sogenanntes Deep-Learning (tiefgehendes Lernen, maschinelles Lernen) auf eine Vielzahl von Daten anwenden kann. Mit anderen Worten ist die Deep-Learning-Engine eine hoch entwickelte Einrichtung zum Durchführen von tiefgehendem Lernen, also eine Umsetzung von künstlicher Intelligenz. Mit anderen Worten sind sowohl künstliche Intelligenz, als auch Maschinenlernen und tiefgehendes Lernen mittels der Deep-Learning-Engine umsetzbar. Die Deep-Learning-Engine kann beispielsweise als tiefgehendes, künstliches neuronales Netz ausgebildet oder ausgestaltet sein, also, mit anderen Worten, dazu eingerichtet sein, mittels einer Methode des maschinellen Lernens eine Vielzahl von Erfahrungswerten, Trainingsdaten oder einem Dataset, nach einem vorbestimmten Algorithmus und anhand der bereits gespeicherten Vielzahl von Erfahrungswerten auszuwerten, beispielsweise über eine darin enthaltene Logik, zum Beispiel eine Korrelation.

Hierdurch können auch weitere logische Verknüpfungen in der Deep-Learning-Engine erstellt werden. Erfahrungswerte oder Trainingsdaten können dabei zum Beispiel zu einer Vielzahl von Genmustern eines oder mehrerer Genabschnitte statistisch zusammengefasst werden, die zum Beispiel ein Übereinstimmungskriterium erfüllen. Ein solches Übereinstimmungskriterium kann zum Beispiel eine Mindestwahrscheinlichkeit dahingehend beschreiben, dass die Person mit diesem Genmuster die Benutzereinstellung bevorzugt.

Mit anderen Worten können die Trainingsdaten oder Erfahrungswerte zum Beispiel als künstliches neuronales Netz zusammengefasst sein, und beispielsweise aus einer Datenbank stammen, und Benutzereinstellungen den jeweiligen Gensequenzen zuordnen. Vorzugsweise können solche Daten zu Genmustern in einer Anzahl von >1000, insbesondere >10.000, zum Trainieren der Deep-Learning-Engine verwendet werden, wobei die Trainingsdaten vorzugsweise über einen vorbestimmten Beobachtungszeitraum erfasst wurden. Ein solcher Datensatz kann als Big-Data-Datensatz bezeichnet werden.

Durch das Betreiben der Deep-Learning-Engine erfolgt anstelle eines statistischen Auswertens über zum Beispiel eine Zuordnungsliste ein dynamisches Prognostizieren oder Prädizieren einer bevorzugten Benutzereinstellung des aktuellen Fahrers/Benutzers. Hierzu erfolgt durch die Zuordnungseinrichtung ein verarbeiten des durch die bereitgestellte Genprofildatei beschriebenen Genmusters des Benutzers mittels der Deep-Learning-Engine, und hierdurch ein Ermitteln einer Konfigurationsprognose des Benutzers, wobei die Konfigurationsprognose eine Wahrscheinlichkeit umfasst, mit welcher der Benutzer eine der Benutzereinstellungen bevorzugt.

Falls die Wahrscheinlichkeit für eine Bevorzugung oder Präferenz einer der Benutzereinstellungen einen vorgegebenen Schwellenwert erreicht oder überschreitet, erfolgt, anhand der Konfigurationsprognose, ein Auswählen einer Benutzerprofildatei aus einer Mehrzahl von Benutzerprofildateien, die einen Datensatz zum Einstellen mindestens eines die bevorzugte Benutzereinstellung beschreibenden Parameters mindestens eines Kraftfahrzeugsystems beschreibt. Beispielsweise kann der Datensatz bevorzugte Einstellungen der Klimaanlage schreiben.

Durch die Zuordnungseinrichtung erfolgt ein Übertragen der ausgewählten Benutzerprofildatei an mindestens ein Kraftfahrzeugsystem zum Konfigurieren des mindestens einen Kraftfahrzeugsystems, also zum Einstellen der durch den Datensatz beschriebenen Parameter.

Die Einstellungen des Kraftfahrzeugsystems können dann vorgenommen werden. Es ergeben sich die bereits oben genannten Vorteile.

Ein weiterer Vorteil des erfindungsgemäßen Verfahrens ergibt sich dahingehend, dass auch bei Fahrern mit einem bisher unbekannten Genmuster eine Benutzerpräferenz in bezüglich auf eine Konfiguration des mindestens einen Kraftfahrzeugsystems prognostiziert werden kann.

Das Verarbeiten des durch die bereitgestellte Genprofildatei beschriebenen Genmusters kann beispielsweise durch ein sogenanntes Alignment einer darin beschriebenen Gensequenz erfolgen, vorzugsweise jedoch durch ein Matching. Als Matching wird dabei eine Methode bezeichnet, mit denen ähnliche Beobachtungen in zwei oder mehr Datensätzen verbunden werden. Bei einem Matching werden anhand gemeinsamer Merkmale an Beobachtungen aus dem Datensatz eine oder mehrere ähnliche Beobachtungen aus den anderen Datensatz zugeordnet. Damit wird eine gemeinsame Analyse der Daten möglich. Für das Matching kann zum Beispiel ein Schwellenwerte vorgegeben sein, aber welcher Wahrscheinlichkeit oder ab welchem Übereinstimmungsgrad der aktuelle Benutzer mit hoher Wahrscheinlichkeit eine bestimmte Benutzereinstellung bevorzugt. Bei dem Matching kann zum Beispiel eine Korrelationsanalyse durchgeführt werden.

Optional kann vorgesehen sein, falls zum Beispiel mehrere der Benutzereinstellungen der Erfahrungswerte infrage kommen, dass dann diejenige Benutzereinstellung mit der höchsten Wahrscheinlichkeit und/oder dem besten Matching ausgewählt werden kann.

Die Deep-Learning-Engine kann optional eine Mehrzahl an Benutzerprofildateien, die jeweils ein Set an Parameterwerten beschreiben können, anhand von in der Zuordnungseinrichtung abgelegten Erfahrungswerten dahingehend überprüfen, ob das jeweilige Set an Parameterwerten ein vorbestimmtes Matchingkriterium erfüllt, das ein zumindest teilweises Übereinstimmen der jeweiligen Genmuster der Erfahrungswerte mit dem Genmuster des Benutzers und den Schwellenwert beschreiben kann. Es ergeben sich die bereits zum Matching erläuterten Vorteile.

Erfolgt, gemäß einer weiteren Ausführungsform des erfindungsgemäßen Verfahrens, das Bereitstellen der Genprofildatei durch Empfangen der Genprofildatei aus einer kraftfahrzeugexternen Servervorrichtung und/oder aus einer Speichereinrichtung, vorzugsweise aus einer portablen Speichereinrichtung, ist der aktuelle Benutzer noch unabhängiger von dem Kraftfahrzeug, das er nutzt. Mit anderen Worten ist es für ihn einfach, Kraftfahrzeugsysteme von fremden Kraftfahrzeugen für benutzerspezifisch einstellen zu lassen. Optional kann das Bereitstellen der Genprofildatei durch Erzeugen der Genprofildatei durch die Zuordnungseinrichtung erfolgen, die die Genprofildatei beispielsweise anhand von Informationen erzeugen kann, die eine Nukleinsäuresequenz des Genabschnittes und/oder eine Information zu Daten zu einer Microarray-Analyse des Genabschnitts beschreiben. Mit anderen Worten wird möglich, dass der Benutzer zum Beispiel einmalig anhand einer Gegenprobe eine solche Analyse oder eine solche Sequenzierung durchführen lässt, und die dadurch erhaltenen Daten dann zukünftig zum Personalisieren von Kraftfahrzeugen verwenden kann.

Der Wert des Parameters kann eine vorgegebene Einstellung des mindestens einen Kraftfahrzeugsystems beschreiben, vorzugsweise eine Einstellung einer Sitzposition und/oder einer Klimaanlage und/oder eines Hintergrundbildes eines Bildschirms des Kraftfahrzeugs. Dies sind besonders wichtige und interessante Einstellungen während einer Fahrt.

Die gestellte Aufgabe wird gelöst durch ein Speichermedium mit einem Programmcode, wobei der Programmcode dazu eingerichtet ist, bei Ausführen durch eine Prozessoreinrichtung ein Verfahren nach einer der beschriebenen Ausführungsformen durchzuführen. Mit anderen Worten ist der Programmcode dazu eingerichtet, bei Ausführen durch eine Prozessoreinrichtung an Zuordnungseinrichtung dazu zu veranlassen, die entsprechenden Verfahren durchzuführen. Das Speichermedium kann dabei als gängiger Datenspeicher ausgestaltet sein, beispielsweise als Speicherkarte oder USB-Stick. Unter einer Prozessoreinrichtung wird eine Gerätekomponente oder ein Bauteil zur elektronischen Datenverarbeitung verstanden, die/das mindestens einen Mikrokontroller und/oder mindestens einen Mikroprozessor aufweisen kann. Es ergeben sich die bereits genannten Vorteile.

Die gestellte Aufgabe wird, unter Erreichen der bereits genannten Vorteile, gelöst durch eine Zuordnungseinrichtung, die dazu eingerichtet ist, ein Verfahren nach einer der oben beschriebenen Ausführungsformen durchzuführen. Die Zuordnungseinrichtung kann dabei beispielsweise als Steuerplatine oder Steuerchip ausgestaltet sein, oder als Anwenderprogramm ("App"). Optional kann die Zuordnungseinrichtung eine für das erfindungsgemäße Verfahren trainierte Deep-Learning-Engine aufweisen.

Die gestellte Aufgabe wird, unter Erreichen der bereits genannten Vorteile, gelöst durch ein Kraftfahrzeug, das eine Ausführungsform der erfindungsgemäßen Zuordnungseinrichtung und/oder eine Ausführungsform des erfindungsgemäßen Speichermediums aufweist. Das Kraftfahrzeug kann vorzugsweise als Kraftwagen ausgestaltet sein, vorzugsweise als Personenkraftwagen.

Die gestellte Aufgabe wird gelöst durch eine Servervorrichtung zum Betreiben im Internet, aufweisend eine Zuordnungseinrichtung nach einer der oben beschriebenen Ausführungsformen, und/oder ein Speichermedium nach einer der oben beschriebenen Ausführungsformen. Die Servervorrichtung kann beispielsweise als Computer, Server im Internet, oder Serververbund ausgestaltet sein, oder zum Beispiel als Daten-Wolke, also als sogenannte "Daten-Cloud". Hier ergeben sich die bereits genannten Vorteile. Optional kann die Servervorrichtung eine für das erfindungsgemäße Verfahren trainierte Deep-Learning-Engine aufweisen.

Die Erfindung umfasst auch die Kombinationen der Merkmale der beschriebenen Ausführungsformen.

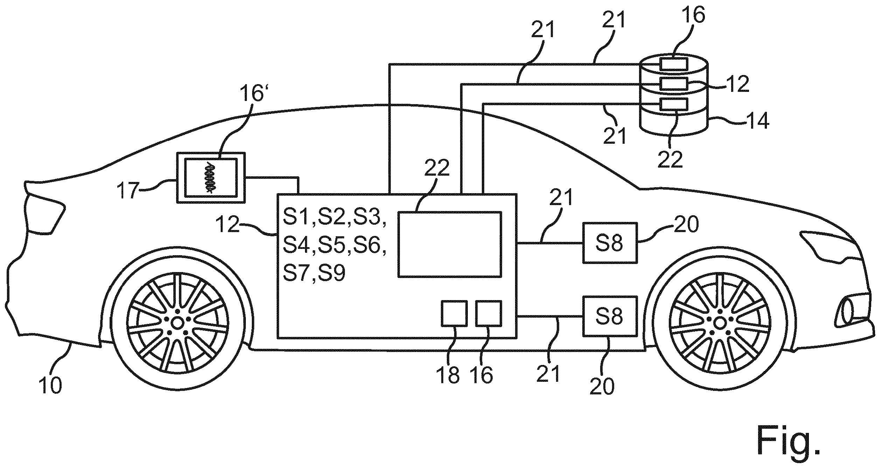

Im Folgenden sind Ausführungsbeispiele der Erfindung beschrieben. Hierzu zeigt die einzige Figur eine schematische Darstellung zu einer Ausführungsform des erfindungsgemäßen Verfahrens und der erfindungsgemäßen Vorrichtungen.

Bei den im Folgenden erläuterten Ausführungsbeispielen handelt es sich um bevorzugte Ausführungsformen der Erfindung.

In der Figur bezeichnen gleiche Bezugszeichen jeweils funktionsgleiche Elemente.

Die einzige Figur veranschaulicht das Prinzip des erfindungsgemäßen Verfahrens anhand eines Ausführungsbeispiels. Hierzu zeigt die Figur ein Kraftfahrzeug 10, beispielsweise ein Personenkraftwagen, wobei das Kraftfahrzeug 10 eine Zuordnungseinrichtung 12 aufweisen kann. Dabei können die in der Figur beschriebenen Verfahrensschritte der Zuordnungseinrichtung 12 alternativ zum Beispiel durch eine optionale Zuordnungseinrichtung 12 einer kraftfahrzeugexternen Servervorrichtung 14 durchgeführt werden. Aus Gründen der besseren Übersicht sind die entsprechenden Verfahrensschritte der Zuordnungseinrichtung 12 jedoch nicht noch zusätzlich in der Zuordnungseinrichtung 12 der kraftfahrzeugexternen Servervorrichtung 14 gezeigt. Alternativ kann die Zuordnungseinrichtung 12 kraftfahrzeuginterne Komponenten und serverinterne Komponenten umfassen.

Zum Durchführen des erfindungsgemäßen Verfahrens kann ein entsprechender Programmcode auf einer Speichereinrichtung 16 abgelegt sein, wobei die optionale Speichereinrichtung 16 zum Beispiel ein Teil der Zuordnungseinrichtung 12 sein kann. Die Speichereinrichtung 16 kann beispielsweise als Speicher oder SD-Karte ausgestaltet sein. Zum Ausführen des Programmcodes kann die Zuordnungseinrichtung 12 optional eine Prozessoreinrichtung 18 aufweisen, die zum Beispiel mehrere Mikroprozessoren aufweisen kann. Die Speichereinrichtung 16, die auch als Speichermedium bezeichnet werden kann, kann zum Beispiel eine Komponente der kraftfahrzeugexternen Servervorrichtung 14 sein. Die Servervorrichtung 14 kann zum Beispiel als Backend oder als Daten-Wolke ausgestaltet sein.

Das Kraftfahrzeug 10 weist mindestens ein Kraftfahrzeugsystem 20 auf, beispielsweise eine Klimaanlage. Das Kraftfahrzeugsystem 20 kann alternativ zum Beispiel ein Gerät zum Einstellen einer Sitzposition oder ein Infotainmentsystem sein, über das zum Beispiel ein Hintergrundbild für einen Willkomms-Bildschirmbild, Hintergrundbild oder eine Favoritenliste von Navigationszielen eingestellt werden kann.

Die einzelnen Komponenten sind dabei mittels Datenkommunikationsverbindungen 21 miteinander verbunden, beispielsweise mittels einer drahtgebundenen Datenkommunikationsverbindung 21, zum Beispiel einem Kabel oder einem Datenbus, oder zum Beispiel mittels einer drahtlose Datenkommunikationsverbindung 21, beispielsweise eine Mobilfunkverbindung, Internetverbindung, WLAN-Verbindung und/oder Bluetooth-LE-Verbindung.

Die Figur zeigt exemplarisch ein weiteres Kraftfahrzeugsystem 20, beispielsweise ein Radio.

Die Zuordnungseinrichtung 12 kann optional eine Deep-Learning-Engine 22 aufweisen, die alternativ in der kraftfahrzeugexternen Zuordnungseinrichtung 12 und/oder in der kraftfahrzeugexternen Servervorrichtung 14 integriert sein kann. Eine solche, kraftfahrzeugexterne Deep-Learning-Engine 22 kann optional von einer kraftfahrzeuginternen Zuordnungseinrichtung 12 ferngesteuert werden.

Die Deep-Learning-Engine 22 kann beispielsweise als künstliches neuronales Netz ausgebildet sein, das zum Beispiel anhand von Erfahrungswerten von einer Vielzahl von Personen, deren Genmuster zum Beispiel analysiert und mit bestimmten benutzerspezifischen Einstellung der beispielhaften Kraftfahrzeugsysteme 20 korreliert wurden, statistische Analysemethoden wie beispielsweise eine Hauptkomponentenregression auf ein Genmuster eines aktuellen Fahrers (oder anderen Benutzers des Kraftfahrzeugs 10) anwenden kann. Ist die Deep-Learning-Engine 22 beispielsweise eine Komponente der Zuordnungseinrichtung 12 des Kraftfahrzeugs 10, kann sie zum Beispiel mit der Speichereinrichtung 16 der kraftfahrzeugexternen Servervorrichtung 14 kommunizieren, wobei auf dieser kraftfahrzeugexternen Speichereinrichtung 16 beispielhaft die Genmuster der Vielzahl von Personen, also die Genmuster der Trainingsdaten, abgelegt sein können. Alternativ oder zusätzlich kann sich auf einer solchen kraftfahrzeugexternen Speichereinrichtung 16 auch die Genprofildatei des aktuellen Benutzers des Kraftfahrzeugs 10 abgelegt sein, zum Beispiel in einem Benutzerkonto des aktuellen Benutzers. Das Trainieren der Deep-Learning-Engine 22 kann beispielsweise offline durchgeführt worden sein.

Der aktuelle Benutzer des Kraftfahrzeugs kann beispielsweise beim Kauf des Kraftfahrzeugs 10, vorzugsweise nach Akzeptieren einer Verwertung seiner Daten durch zum Beispiel einen Anbieter eines Services oder durch den Kraftfahrzeughersteller, eine Haarprobe oder Speichelprobe abgeben, die dann zum Beispiel sequenziert werden kann, oder die beispielsweise mithilfe einer Microarray-Analyse auf das Genmuster untersucht werden kann. Das Verwenden der Informationen der Genprofildatei, die nach Auswerten der Nukleinsäuren-Analyse erstellt werden kann, kann vorzugsweise durch eine Datenschutzrichtlinie geregelt sein.

Das Bereitstellen der Genprofildatei (S1), die beispielsweise eine Nukleinsäuresequenz oder einer Information darüber, welchen quantitativen Basenanteile zum Beispiel ein bestimmter Genabschnitt eines bestimmten Genes des Benutzers aufweist, beschreibt, kann beispielsweise bereitgestellt werden (S1), in dem die Genprofildatei von der kraftfahrzeugexternen Speichereinrichtung 16 abgerufen werden kann. Die Genprofildatei kann beispielsweise eine Information darüber enthalten, auf welchem Locus sich das durch die Genprofildatei beschriebene Genmuster befinden kann.

Im Beispiel der Figur ist eine optionale, von der Zuordnungseinrichtung 12 baulich getrennte Speichereinrichtung 16' gezeigt, die zum Beispiel als portables Speichermedium ausgestaltet sein kann, zum Beispiel als USB-Stick oder als Speicherkarte. Auf der portablen Speichereinrichtung 16' kann zum Beispiel die Genprofildatei mit der Information über das Genmuster abgelegt sein und damit der Zuordnungseinrichtung 12 über zum Beispiel Einstecken der portablen Speichereinrichtung 16' zur Verfügung gestellt werden.

Alternativ kann die Deep-Learning-Engine 22 zum Beispiel mit einem mobilen Endgerät (in der Figur nicht gezeigt) kommunizieren, und von dieser zum Beispiel die Genprofildatei des aktuellen Benutzers abrufen.

Die bereitgestellte Genprofildatei wird im Verfahrensschritt S2 an die Deep-Learning-Engine 22 übertragen.

Das Betreiben der Deep-Learning-Engine 22 (S3) kann beispielsweise durch Fernsteuerung erfolgen, falls die Deep-Learning-Engine 22 eine kraftfahrzeugexterne Deep-Learning-Engine ist.

Das Betreiben der Deep-Learning-Engine 22 (S3) kann beispielsweise als Steuern der Deep-Learning-Engine 22 dahingehend erfolgen, dass die in der Speichereinrichtung 16 abgelegte Genprofildatei zum Beispiel über einen Algorithmus, der eine Regel zum Erfüllen eines Übereinstimmungskriteriums beschreiben kann, auf das Erfüllen des Übereinstimmungskriteriums überprüft werden kann. Das Übereinstimmungskriterium kann beispielsweise vorgeben, dass bei einem Matching mit besagter Mindestanforderung an das Übereinstimmen die Einstellung "Radiosender mit Techno-Musik" zu einem hohen Prozentsatz oder zu einer hohen Wahrscheinlichkeit von dem Benutzer bevorzugt wird.

Das Verarbeiten des Genmusters des Benutzers (S4) kann vorzugsweise über ein Matching (S9) erfolgen. Das beispielhafte neuronale Netz der Deep-Learning-Engine 22 kann als beispielhaften Ausgangsknoten des neuronalen Netzes, also als beispielhaften Ausgangswert, beim Ermitteln der Konfigurationsprognose (S5) feststellen, dass das Genmuster des aktuellen Benutzer zum Beispiel einer vorbestimmten Musikvorliebe zugeordnet werden kann und damit beispielsweise eine Benutzereinstellung zum Einstellen eines Radiosenders mit Techno-Musik als bevorzugte Benutzereinstellung für ein Radio prognostizieren. Diese Konfigurationsprognose kann beispielsweise darauf basieren, dass beim Training der Deep-Learning-Engine 22 die beispielhafte künstliche Intelligenz "gelernt" hat, das Genmuster mit einer hohen Ähnlichkeit, also zum Beispiel mit einer Übereinstimmung eines Mindestprozentsatzes, zu zum Beispiel einer bestimmten Gensequenz erfahrungsgemäß bei denjenigen Benutzern vorkommt, die während einer Fahrt häufig einen Radiosender mit Techno-Musik einstellen.

Ein anderer beispielhafter, alternativer oder zusätzlicher Ausgangspunkt kann beispielsweise eine Einstellung einer Heizung der Klimaanlage auf kontinuierlich 20°C sein, oder, anstatt es beispielhaften numerischen Wertes, ein Temperaturbereich oder eine relative Temperaturangabe. Ein weiterer, beispielhafter Ausgangspunkt kann beispielsweise eine Benutzereinstellung für ein sportliches Fahrverhalten sein, also eine qualitative Benutzereinstellung. Eine solche sportliche Fahrweise kann beispielsweise später als Parameter zum Einstellen eines Fahrerassistenzsystems eingestellt werden.

Im Beispiel der Figur kann beispielsweise ein Schwellenwert von 70% angesetzt sein, und das beispielhafte Matching kann ergeben, dass der aktuelle Benutzer zu 95% in seinem Genmuster mit denjenigen der Vielzahl von Personen übereinstimmt, die diese Radiosender-Einstellung oder Klimaanlageneinstellung als bevorzugte Benutzereinstellung angegeben haben.

Zu jedem Ausgangsknoten kann zum Beispiel in der Speichereinrichtung 16 der Servervorrichtung 14 eine Mehrzahl von Benutzerprofildateien abgelegt sein, die zum Beispiel entsprechende Sets von Parametern (oder einzelne Parameterwerte) zum Einstellen der beispielhaften Klimaanlage und des beispielhaften Radios beschreiben können. Im Beispiel der Figur kann dann im Verfahrensschritt S6 eine Benutzerprofildatei ausgewählt werden, die einen Datensatz beschreiben kann, der die Einstellungen zum Beispiel einer Wellenlänge des Radiosenders mit der Techno-Musik und/oder einen Datensatz zum Einstellen der beispielhaften Heizung auf 20°C beschreiben kann. Diese Benutzerprofildatei wird dann an das Kraftfahrzeugsystem 20, zusätzlich oder alternativ an zum Beispiel ein Steuergerät des Kraftfahrzeugs 10 zum Einstellen der Kraftfahrzeugsysteme 20, übertragen (S7).

In dem Kraftfahrzeugsystem werden dann die voraussichtlich bevorzugten Einstellungen, die durch diese Benutzerprofildatei beschrieben werden, eingestellt (S8). Alternativ oder zusätzlich kann das Konfigurieren S8 zum Beispiel durch die Zuordnungseinrichtung 12 durchgeführt werden.

Insgesamt veranschaulicht das Ausführungsbeispiel, wie durch die Erfindung Fahrzeugeinstellungen anhand zum Beispiel eines Genmusters, beispielsweise eines Genexpressionsprofils, mittels maschinellen Lernen bereitgestellt werden können.

Gemäß einem weiteren Ausführungsbeispiel können durch zum Beispiel Analyse von Gendaten einer Vielzahl an Benutzern genetische Muster gelernt werden, welche in Verbindung mit fahrzeugbezogenen Eigenschaften stehen, also mit Benutzereinstellungen. Für einen Benutzer kann anschließend zum Beispiel das persönliche Genom zum Beispiel sequenziert und analysiert werden, und die individuellen Fahrzeugeigenschaften für den Benutzer prädiziert werden.

Zum Trainieren des maschinellen Lernen-Algorithmus können zum Beispiel Genexpressionsdaten, zum Beispiel via Microarray, einer Vielzahl von Fahrzeugbenutzern erhoben werden. Weiter können fahrzeugbezogene Daten wie Fahrzeugeinstellungen und/oder Vorlieben der gleichen Personen bzw. Benutzer abgefragt und/oder erhoben werden.

Mit diesen Daten kann ein tiefes neuronales Netz trainiert werden, welches als Eingangswerte die einzelnen Werte aus den Genexpressionsdaten bekommen kann. Das neuronale Netz kann für jeden Fahrzeugeinstellungswert und/oder für jede Vorliebe einen Ausgangsknoten bekommen und/oder selbst erstellen.

Mithilfe der Trainingsdaten kann das neuronale Netz so trainiert werden, dass die Eingangsdaten zu den entsprechenden Ausgangswerten passen, was eine Funktionsweise eines künstlichen neuronalen Netzwerkes entspricht.

Optional kann zu einer Applikation dem Benutzer eine Genprobe entnommen (zum Beispiel ein Haar) und zur Auswertung in ein Labor geschickt werden, in welchem das gleiche Genexpressionsprofil erstellt werden kann wie für die Probanden der Trainingsdaten. Diese Werte können in das trainierte Modell gefüttert und zum Beispiel für jeden Ausgangsknoten kann ein Wert prognostiziert werden. Dieser wird verwendet um die Fahrzeugeinstellungen des aktuellen Benutzers vorzunehmen.

## Patentansprüche

1. Verfahren zum Betreiben eines Kraftfahrzeugsystems (20) anhand einer benutzerspezifischen Benutzereinstellung, das Verfahren aufweisend die folgenden, durch eine Zuordnungseinrichtung (12) durchgeführten Schritte:
- Bereitstellen einer Genprofildatei, die ein Genmuster eines Benutzers des Kraftfahrzeugs (10) beschreibt, wobei das beschriebene Genmuster einen Genbereich eines Genoms des Benutzers beschreibt (S1),
- Übertragen der bereitgestellten Genprofildatei an eine Deep-Learning-Engine (22, S2),
- Betreiben der Deep-Learning-Engine (22, S3), wobei durch die Deep-Learning-Engine (22) zu einer Vielzahl von Personen Genmuster mindestens eines vorbestimmten Genbereichs und einer jeweiligen bevorzugten Benutzereinstellung statistisch zusammengefasst sind,
- Verarbeiten des durch die bereitgestellte Genprofildatei beschriebenen Genmusters des Benutzers mittels der Deep-Learning-Engine (22, S4) und hierdurch Ermitteln einer Konfigurationsprognose des Benutzers (S5), wobei die Konfigurationsprognose eine Wahrscheinlichkeit umfasst, mit welcher der Benutzer eine der Benutzereinstellungen bevorzugt,
- falls die Wahrscheinlichkeit für eine Präferenz eine der Benutzereinstellungen einen vorgegebenen Schwellenwert erreicht oder überschreitet: anhand der Konfigurationsprognose Auswählen einer Benutzerprofildatei, die ein Datensatz zum Einstellen mindestens eines die bevorzugte Benutzereinstellung beschreibenden Parameters mindestens eines Kraftfahrzeugsystems (20) beschreibt (S6), und
- Übertragen der ausgewählten Benutzerprofildatei an mindestens ein Kraftfahrzeugsystem (20) zum Konfigurieren des mindestens einen Kraftfahrzeugsystems (20, S7).

2. Verfahren nach Anspruch 1, **dadurch gekennzeichnet, dass** die Deep-Learning-Engine (22) eine Mehrzahl an Benutzerprofildateien, die jeweils ein Set an Parameterwerten beschreiben, anhand von in der Zuordnungseinrichtung (12) abgelegten Erfahrungswerten dahingehend überprüft, ob das jeweilige Set an Parameterwerten ein vorbestimmtes Matchingkriterium erfüllt (S9), das ein zumindest teilweises Übereinstimmen der jeweiligen Genmuster mit dem Genmuster des Benutzers und den Schwellenwert beschreibt.

3. Verfahren nach einem der vorhergehenden Ansprüche, **dadurch gekennzeichnet, dass**
das Bereitstellen der Genprofildatei (S1) erfolgt durch:
- Empfangen der Genprofildatei aus einer kraftfahrzeugexternen Servervorrichtung (14) und/oder aus einer Speichereinrichtung (16); und/oder
- Empfangen einer Information zu einer Nukleinsäuresequenz des Genabschnitts und/oder Daten zu einer Microarray-Analyse des Genabschnitts, und Erzeugen der Genprofildatei anhand der empfangenen Information.

4. Verfahren nach einem der vorhergehenden Ansprüche, **dadurch gekennzeichnet, dass**
der Wert des Parameters eine vorgegebene Einstellung des mindestens einen Kraftfahrzeugsystems (20) beschreibt, vorzugsweise eine Einstellung einer Sitzposition, und/oder einer Klimaanlage, und/oder eines Hintergrundbildes eines Bildschirms.

5. Speichermedium (16) mit einem Programmcode, der dazu eingerichtet ist, bei Ausführen durch eine Prozessoreinrichtung (18) ein Verfahren nach einem der Ansprüche 1 bis 4 durchzuführen.

6. Zuordnungseinrichtung (12), die dazu eingerichtet ist, ein Verfahren nach einem der Ansprüche 1 bis 4 durchzuführen.

7. Kraftfahrzeug (10), das durch eine Zuordnungseinrichtung (12) nach Anspruch 6 und/oder ein Speichermedium nach Anspruch 5 gekennzeichnet ist.

8. Servervorrichtung (14) zum Betreiben im Internet, aufweisend eine Zuordnungseinrichtung (12) nach Anspruch 6 und/oder ein Speichermedium (16) nach Anspruch 5.

## Claims

1. Method for operating a motor vehicle system (20) on the basis of a user-specific user setting, the method having the following steps carried out by an assignment device (12):
- Providing a genetic profile file, which describes a genetic pattern of a user of the motor vehicle (10), wherein the described genetic pattern describes a gene region of a genome of the user (S1),
- transmitting the genetic profile file provided to a deep learning engine (22, S2),
- operating the deep learning engine (22, S3), wherein, for a multiplicity of persons, genetic patterns of at least one predetermined gene region and a respective preferred user setting are statistically combined by the deep learning engine (22),
- processing of the user's genetic pattern described by the provided genetic profile file by means of the deep learning engine (22, S4) and thereby determining a configuration forecast of the user (S5), wherein the configuration forecast comprises a probability, with which the user prefers one of the user settings,
- if the probability of a preference for one of the user settings reaches or exceeds a specified threshold value: On the basis of the configuration prognosis selecting a user profile file, which describes a data set for setting at least one parameter describing the preferred user setting at least of one motor vehicle system (20) (S6), and
- transmitting the selected user profile file to at least one motor vehicle system (20) in order to configure the at least one motor vehicle system (20, S7).

2. Method according to claim 1, **characterised in that** the deep learning engine (22) checks a plurality of user profile files, which in each case describe a set of parameter values, on the basis of empirical values stored in the assignment device (12) to find out whether the respective set of parameter values satisfies a predetermined matching criterion (S9), which describes an at least partial agreement of the respective gene patterns with the gene pattern of the user and the threshold value.

3. Method according to any one of the preceding claims, **characterised in that** the provision of the genetic profile file (S1) is carried out by:
- Receiving the genetic profile file from a motor vehicle-external server apparatus (14) and/or from a memory device (16);
and/or
- receiving information on a nucleic acid sequence of the gene section and/or data on a microarray analysis of the gene section, and generating the genetic profile file on the basis of the information received.

4. Method according to any one of the preceding claims, **characterised in that**
the value of the parameter describes a predetermined setting of the at least one motor vehicle system (20), preferably a setting of a seat position, and/or an air conditioner, and/or a background image of a display screen.

5. Memory medium (16) with a program code, which is configured to carry out a method according to any one of claims 1 to 4 when executed by a processor device (18).

6. Assignment device (12), which is configured to carry out a method according to any one of claims 1 to 4.

7. Motor vehicle (10), which is **characterised by** an assignment device (12) according to claim 6 and/or a memory medium according to claim 5.

8. Server apparatus (14) for operating in the Internet, having an assignment device (12) according to claim 6 and/or a memory medium (16) according to claim 5.

## Revendications

1. Procédé permettant de faire fonctionner un système de véhicule automobile (20) à l'aide d'un réglage utilisateur spécifique à l'utilisateur, ledit procédé présentant les étapes ci-dessous mises en œuvre grâce à un dispositif d'affectation (12) et consistant à :
- fournir un fichier de profil génétique décrivant un modèle génétique d'un utilisateur du véhicule automobile (10), dans lequel le modèle génétique décrit décrit (S1) une région génétique d'un génome de l'utilisateur,
- transmettre le fichier de profil génétique fourni à un moteur d'apprentissage profond (22, S2),
- faire fonctionner le moteur d'apprentissage profond (22, S3), dans lequel, pour une pluralité de personnes, des modèles génétiques d'au moins une région génétique prédéfinie et d'un réglage utilisateur respectif préféré sont regroupés de manière statistique grâce au moteur d'apprentissage profond (22),
- traiter le modèle génétique de l'utilisateur, décrit grâce au fichier de profil génétique fourni, au moyen du moteur d'apprentissage profond (22, S4) et déterminer ainsi une prédiction de configuration de l'utilisateur (S5), dans lequel la prédiction de configuration comprend une probabilité pour que l'utilisateur préfère un des réglages utilisateur,
- si la probabilité d'une préférence pour un des réglages utilisateur atteint ou dépasse une valeur de seuil prédéfinie : à l'aide de la prédiction de configuration, sélectionner un fichier de profil utilisateur qui décrit (S6) un enregistrement de données afin de régler au moins un paramètre, décrivant le réglage utilisateur préféré, d'au moins un système de véhicule automobile (20), et
- transmettre le fichier de profil utilisateur sélectionné à au moins un système de véhicule automobile (20) afin de configurer le au moins un système de véhicule automobile (20, S7).

2. Procédé selon la revendication 1, **caractérisé en ce que**
le moteur d'apprentissage profond (22) vérifie, à l'aide de valeurs expérimentales stockées dans le dispositif d'affectation (12), une pluralité de fichiers de profil utilisateur décrivant respectivement un ensemble de valeurs de paramètre afin de déterminer si l'ensemble respectif de valeurs de paramètre remplit (S9) un critère de concordance prédéterminé décrivant une coïncidence au moins partielle du modèle génétique respectif avec le modèle génétique de l'utilisateur et la valeur de seuil.

3. Procédé selon l'une quelconque des revendications précédentes, **caractérisé en ce que**
la fourniture du fichier de profil génétique (S1) intervient grâce aux étapes consistant à :
- recevoir le fichier de profil génétique en provenance d'un dispositif formant serveur, extérieur au véhicule automobile (14), et/ou en provenance d'un dispositif de stockage (16) ; et/ou
- recevoir des informations concernant une séquence d'acide nucléique de la section génique et/ou des données concernant une analyse sur microréseau de la section génique, et générer le fichier de profil génétique à l'aide des informations reçues.

4. Procédé selon l'une quelconque des revendications précédentes, **caractérisé en ce que**
la valeur du paramètre décrit un réglage prédéfini du au moins un système de véhicule automobile (20), de manière préférée un réglage d'une position assise, et/ou d'un système de climatisation, et/ou d'une image de fond d'écran.

5. Support de stockage (16) avec un code de programme conçu pour mettre en œuvre un procédé selon l'une quelconque des revendications 1 à 4 lorsque ledit code de programme est exécuté par un dispositif formant processeur (18).

6. Dispositif d'affectation (12) conçu pour mettre en œuvre un procédé selon l'une quelconque des revendications 1 à 4.

7. Véhicule automobile (10), **caractérisé par** un dispositif d'affectation (12) selon la revendication 6 et/ou un support de stockage selon la revendication 5.

8. Dispositif formant serveur (14) destiné à fonctionner sur Internet, présentant un dispositif d'affectation (12) selon la revendication 6 et/ou un support de stockage (16) selon la revendication 5.
